# EUROPEAN PATENT SPECIFICATION

(11) **EP 1 463 416 B1**
(45) Date of publication and mention of the grant of the patent: **16.09.2009**
(21) Application number: 02790276.6
(22) Date of filing: 20.12.2002
(51) Int. Cl.: A23G 1/20, A23G 9/28

(54) **METHOD AND APPARATUS FOR PRODUCTION OF A CONFECTIONERY PRODUCT AND SET OF KNIVES FOR THIS USE**
VERFAHREN UND GERÄT ZUR HERSTELLUNG EINES SÜSSWARENPRODUKTS UND MESSERSATZ HIERFÜR
PROCEDE ET APPAREIL DE PRODUCTION D'UNE FRIANDISE ET JEU DE COUTEAUX A CET EFFET

(30) Priority: 20.12.2001 DK 200101929
(43) Date of publication of application: 06.10.2004
(73) Proprietor: Gram Equipment A/S, 6500 Vojens (DK)
(72) Inventor: FESSLER, Martin, DK-6600 Vejen (DK)
(74) Representative: Nielsen, Leif
(86) International application number: PCT/DK2002/000893
(87) International publication number: WO 2003/053154

(56) References cited:
- EP-A1- 0 223 884
- WO-A1-00/67587
- WO-A1-94/10855
- US-A- 3 918 862

## Description

The present invention relates to a method for production of a confectionery product' by extrusion through the nozzle orifice of an extrusion nozzle where cutting off means are moved transversely of the direction of the extrusion in order to separate the uttermost end part from the remaining part of the confectionery string and hereby form the confectionery product.

The invention also relates to an apparatus for production of a confectionery product by extrusion which apparatus comprises an extrusion nozzle with a nozzle orifice, cutting off means arranged to be moved transversely of to the direction of extrusion in order to separate the uttermost end part from the remaining part of the confectionery string, and hereby form the confectionery product.

The invention moreover relates to a set of knives for use in an apparatus for production of a confectionery product by extrusion and which comprises an extrusion nozzle with a nozzle orifice, which set of knives is arranged to be moved transversely of the direction of extrusion in order to separate the uttermost end part from the remaining part of the confectionery string and hereby form the confectionery product.

The invention particularly relates to production of confectionery products in the form of ice-cream products. However, the invention may also be used in connection with production of other string extruded products regardless of whether these are provided with stick, as for example lollipops. The problem and the advantages of the invention will, however, be explained specifically in consideration of the production of ice-cream products.

When producing ice-lollies it is known to extrude products with substantial independence during shaping. It is possible to produce ice-lollies shaped with a desired form such as seen in the direction of the extrusion. For example ice-lolly figures containing one or more colours, ice-cream with different flavour additives added, ice-lolly products or combined products comprising ice-cream and ice-lolly.

The extruded ice-cream products may be produced with or without a stick inserted. Thus, it will be possible to extrude the products directly on supporting faces where the product which is cut off from the string is put down for further treatment as for example freezing, coating etc.

The confectionery product may be produced by a string of continuous vertically extruded ice-cream substance being cut off at the extrusion nozzle and then placed on a conveyor belt or transport tray running below.

The cutting off of the string made from extruded confectionery substance may occur perpendicular to the direction of extrusion. Hereby, such products will achieve a form which is limited between the two parallel faces. During the cutting off problem associated with throwing the cut off product often occur due to the cutting off means' hitting effect on the product. This impairs the appearance of the product and may also complicate the succeeding treatment as the product appears dissimilarly in form and placement on the transport face.

It is also known to extrude ice-cream products by horizontal extrusion of a string of ice-cream which is cut off and put down on a continuously driven conveyor where the direction of extrusion and the movement of the conveyor take place is the same direction. In this type of extrusion, independence occurs when shaping the products in the direction of extrusion. It will be possible to provide the product with different cross-sectional shapes with one or more colours of ice-cream arranged side by side such as seen in the formed product's longitudinal direction/direction of extrusion.

It is also possible to rotate the extruder's nozzle such that twisted products are produced. Likewise, it will be possible to move the entire extruder head or the extrusion nozzle back and forth in the direction of extrusion or sideways in relation to the direction of extrusion such that wavy products are produced. Thus, during this way of extrusion more degrees of independence for shaping the product occur.

During the horizontal extrusions of the ice-cream product with a profiled cross-section these are produced lying horizontally on the trays and will have no stick. A product produced by the horizontal extrusion is thus commonly known as an ice-cream bar. This product has a largely unchanged cross-section across its entire length and is finished by largely parallel end faces. The only degree of freedom connected with this product is thus the placing of more types of ice-cream side by side.

A common feature for these extruded products is the need to perform a cutting off of the confectionery string. This has prevented the possibility of freely choosing macro particles for the confectionery substance since such macro particles have reduced the possibility or made it impossible to cut across as the macro particles have merely been squeezed through the soft confectionery substance when they have been placed in the cut.

Thus, prior art methods for production of ice-cream products are all associated with possibilities to change the form the product may have with substantial limitations in the possibility to change these by adding macro particles to the products before the extrusion.

Demands for new types of ice-cream products exist and for many years it has been desired to produce products with contents of different types such as nuts, chocolate, nougat, sweets, wine gums or other macro particles which are included in the process of creating new products. This need cannot be met with the known extrusions. Such products with different contents are therefore formed by use of moulds. It is, however, a process which has a limited capacity compared to extrusion. Desires concerning extrusion of such products exist.

With the present invention, a method and an apparatus as well as a set of knives are shown making it possible to produce a confectionery product which meets these demands.

Thus, the method according to the invention is peculiar in that the cutting off means in the form of two interacting knives are displaced at great speed through the confectionery string from a first position where the knife edges are outside the confectionery string to a second position within the confectionery string where the knife edges overlap each other and the nozzle orifice is thereby blocked and back to the first position, and that the side faces of the knives are kept in flexible abutment against the nozzle orifice during the displacing movement.

The apparatus according to the invention is peculiar in that the cutting off means comprise two interacting knives arranged to be displaced through the confectionery string at great speed from a first position where the knife edges are outside the confectionery string to a second position within the confectionery string where the knife edges overlap each other and the nozzle orifice is thereby blocked, that the knives are connected with spring means, preferable a tension spring between each knife and the extrusion nozzle in order to keep the side faces in flexible abutment against the nozzle orifice, that the edge on one knife is sharpened at one side and that the edge on the second knife is sharpened at two sides.

The set of knives according to the invention is peculiar in that it comprises two interacting knives which are arranged for the knife edges to overlap each other as the edge on one knife is sharpened at one side and the edge on the second knife is sharpened at two sides.

With the present invention it has proven possible to produce confectionery products having varying characteristics due to the possibility of adding different macro particles to the ice-cream substance.

Thus, it has proven possible to cut across macro particles in the cut of the confectionery string by using to interacting knives which at great speed are led through the confectionery string. During the displacement of the knives, the side faces are kept in flexible abutment against the nozzle orifice. Hereby it has proven possible to retain the confectionery substance in the channel in the nozzle orifice such that there is no need to clean conveying faces or risk of deforming products.

It has, moreover, proven possible that by using two interacting knives a secure and precise placement of the cut off product on conveying faces below the nozzle orifice is achieved. It is preferred to have as small a drop as possible, for example for a few mm to a few cm. However, it has turned out that even at larger drops a secure positioning is achieved as the knives do not provide the product with any projectile movement.

It has turned out that the knives are kept self-cleaning and that therefore there is no risk that the ice-cream sticks to knives and thereby risks being given projectile movement. Surprisingly it has turned out that the fat, which is the ice-cream, is sufficient to establish a secure lubrication even when the side faces of the knives are kept in a sufficiently powerful abutment by the effect of a spring against the nozzle orifice in order to prevent the extrusion pressure existing within the channel of the nozzle orifice. In practice, the knives are sharpened together with the face of the nozzle orifice against which they are in abutment. Despite great speeds and substantial abutment pressures, no noticeable wear or seizing in the knives.

When cutting across the confectionery string, the edges do not risk colliding and being ruined when a sharpening at one side on one knife and a sharpening at two sides on the second knife are established. Hereby the uttermost cutting edge will be places at different levels. This is advantageous as it reduces demand for tolerance when producing the apparatus.

Thus, the knife edges may overlap each other and ensure a complete cutting across the confectionery string. In the overlapping position, the knife edge sharpened at one side wiU with its not sharpened side be in abutment against the nozzle orifice. The uttermost part of the edge will pass by the uttermost part of the knife edge on the second tip which is at a level a short distance in front of the abutment face of the nozzle orifice, and may possibly be in abutment against the side of the edge sharpened at two sides facing against or away from the nozzle orifice. If such an abutment appears, it will merely mean that the knife sharpened at two sides is displaced for a short distance away from or is pressed against the nozzle orifice. In practice, this has proven of no importance due to closeness and will not imply any damages of the edges of the knives.

In practice, the knife sharpened at two sides may be identical with the knife sharpened at one side, merely with the difference that an uttermost end part has be sharpened away with an angle corresponding to the angle of the edge sharpened at one side. In practice, it is preferred to sharpen the knives with an angle between 15 and 45° and preferably an angle of approximately 30°. Hereby it has proven possible to cut through all the macro particles with which tests have been performed, without such macro particles being displaced with projectile effect from the knives. The movement of the knife will preferable be a reciprocating movement but may alternatively be a swinging movement. By the swinging movement, the two knives may be led together in a scissors-like way.

During their displacement, the knives will achieve accelerations up to approximately 20g, irrespective of whether this is performed by swinging or reciprocation, and simultaneously the knives will be led through at a speed corresponding to a turn-around time of approximately 20 milliseconds for a complete travel during the reciprocating movement of 90 mm. This corresponds to an average speed of 4.5 m/sec., however, during the travel the speed will be considerably higher.

The knife movement will preferable be performed by the use of an excenter drive. A bar connection connects the knife with a rotating disc arranged on an electric actuator having as little inertia as possible. Hereby, it can be provided with a very quick and precise movement to the knife such that this is displaced through the confectionery string with a very precise control. The control of the knife movement may be performed by using a computer or PLC. Alternatively to an excenter drive, the knives may be driven with a ring drive. In this way, a notched belt in engagement with a toothing on the knives may be used to displace this in the reciprocating movement.

In order to achieve a particularly effective self-cleaning effect of the knives, it has proven advantageous to maintain the temperature of the knife at a temperature above freezing point and preferable at a temperature within an interval between 6 and 10°. This may take place by blowing air over the knives such that these are swept over. However, it is difficult to control the air current, and there is a risk of a destructive heating of the ice-cream substance. Therefore, it is preferred that a heated block is provided around the extrusion nozzle, and that the knives slide while they are in abutment against the heated block. The block may be provided such that it more or less surrounds the nozzle orifice.

Each of the knives has an undercutting at the side face facing away from the nozzle orifice. The undercutting may extend over a larger or smaller part of the side face, and in certain cases a larger thickness of the knife edge may be provided in the area outside the edge instead of an undercutting in the side face of the knife. By using the undercutting, an air space is created in the section which is created in the confectionery string. Hereby, it is avoided that the confectionery substance sticks to the side of the knife edge facing away from the nozzle orifice. Thus, the undercutting contributes to a self-cleaning effect which ensures that the knife lets go of the cut off product which may thereby be put down on an underlying conveyor plate without being provided with a projectile effect and without the risk of providing the product with a dissimilar form.

The undercutting may have different forms. Thus, the passage may be rectilinear, jagged or have a concave or convex curve. It merely has to be ensued that a space of air is established between the confectionery product and the face of the knife.

In most cases, the knives will be provided with rectilinear edges, however, it is also possible to use edges with a curved profile. It is important that the side faces of the knives are placed close to the nozzle orifice such that retained confectionery product is retained in the channel within the nozzle orifice. If this does not happen, additional or cut off parts of the confectionery substance will fall down on the receiving conveyor and contaminate this and make succeeding steps in the process difficult.

When a confectionery product provided with a stick is produced, as for example an ice-lolly, it is possible to place the stick by means of a stick arrangement device. This may take place by inserting the stick into the product in the direction transverse of the direction of extrusion. Hereby, it is possible to achieve great production speed. Alternatively, it is also possible to insert the stick in other directions, for example parallel with the direction of extrusion.

It is possible to provide the nozzle orifice with a recess stretching a bit up along the channel of the nozzle orifice such that a stick may be inserted into the confectionery substance before the individual confectionery products are cut off.

Hereafter, the invention will be explained in more detail with reference to the accompanying drawing where
- Fig. 1: shows a partial side view of a first embodiment of an apparatus according to the invention,
- Fig. 2: shows a plan view, partly sectional, of the apparatus shown in Fig. 1,
- Fig. 3: shows an enlarged detail of the apparatus shown in Figs. 1 and 2, particularly for illustration of the knives,
- Fig. 4: shows a view corresponding to the Fig. 1 of a second embodiment of an ap- paratus according to the invention,
- Fig. 5: shows a plan view of the apparatus shown in Fig. 4,
- Fig. 6: shows a partial view of the apparatus shown in Fig. 4 seen in the direction of the arrows VI-VI,
- Fig. 7.: shows a view of the apparatus shown in Fig. 6 seen according to the arrows VII-VII, and
- Fig. 8: shows a view corresponding to Fig. 3 of a second embodiment of the knives in the apparatus according to the invention.

In the following, identical and corresponding parts will be described with the same reference numerals. Therefore, no specific explanation is given in connection with each individual figure.

It is noted that in order for the apparatus to be functional it necessitates more elements than the ones shown in the drawing. However, such further elements are well-known, for example from description of plants used for production of ice-cream products by extrusion.

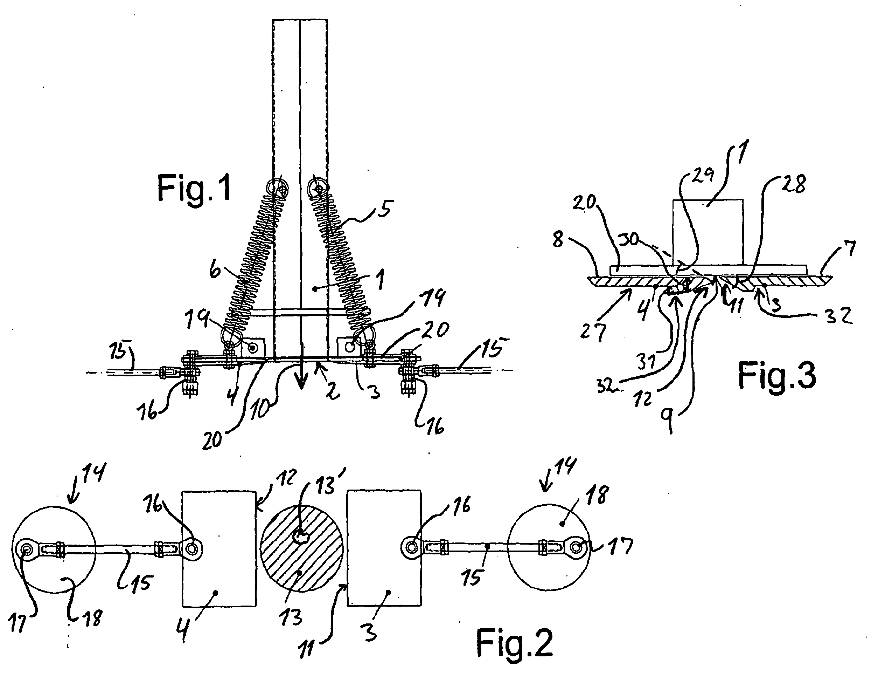

Fig. 1 shows an apparatus with an extrusion nozzle 1 with a nozzle orifice 2. At the nozzle orifice cutting off means are arranged in the form of a first knife 3 and a second knife 4. Each of the knives a connected with the extrusion nozzle 1 with a tension spring 5,6 such that the knives with their back 7,8 (see Fig. 3) are in abutment against a face 9 surrounding the nozzle orifice 2. The face 9 and the backs 7,8 of the knives 3,4 are made from stainless steel which has been sharpened together.

The knives 3,4 are controlled in guideways (not shown) for reciprocating movement transversely of the direction of extrusion 10. Thus, the edges of the knives 11,12 may be displaced from a first position outside an extruded confectionery string 13 such as shown in Fig. 2 to a second position where the uttermost tip of the edges of the knives overlap each other in a position within the confectionery string 13. In the confectionery string 13, at 13' an additive is illustrated which is in the cut and which is cut across by use of the knives 3,4. The additive 13' is not dislocated in the confectionery string 13 during the cutting. In Fig. 3 a position is shown for the knives 3,4 immediately before they are in their second position. Thus, Fig. 3 illustrates a placement of the knives 3,4 immediately before or immediately after the placement in their second position.

The knives are driven by an excenter drive 14 via a bar connection 15. The bar connection 15 is connected with the knives 3,4 via a pivot joint 16 and via a further pivot joint 17 connected with a rotating disc 18. The rotating disc 18 is connected with an electrical motor (not shown) which can start and stop the movement of the knife based on predetermined signals depending on the size of the product to be cut off from the confectionery string 13.

In Fig. 1 two blocks 19 are seen arranged on each side of the extrusion nozzle 1. The blocks 19 are provided with electrical heating means and thereby heat an adjacent plate 20 forming the abutting face 9 against which the knives 3,4 are in contact. The heating organs 19 ensure that the knives can be maintained at a temperature within an interval between 6-10°. It is possible to do without the plate 20 and arrange the knives in direct abutment against the underside of the blocks 19. However, it is preferred to use the plate 20 as this can suitably be sharpened together with the face of the nozzle orifice in order thereby to create a plant face for the knives such that the extrusion pressure does not press the product out by slits when the knives are in their interacting position where the edges overlap each other.

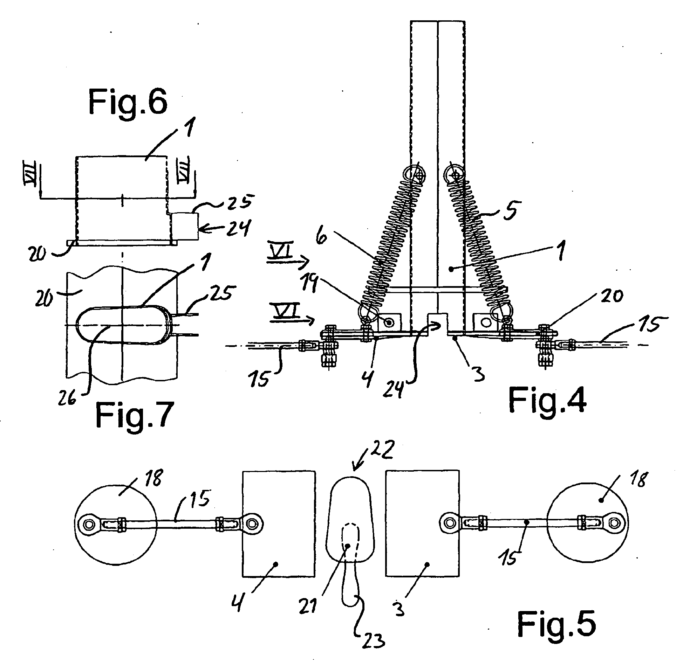

The embodiment illustrated in Figs. 1-3 shows extrusion of string-shaped products which are deposited on underlying transport face (not shown). In Figs. 4-7 a modified embodiment is illustrated in which a product 21 in the form of a shaped ice-cream body 22 is extruded by an inserted stick 23.

Therefore, the nozzle pipe 1 comprises a crosswise opening 24 through which sticks 23 may be inserted into the ice-cream substance while it is still in the channel of the nozzle orifice. It may be seen that the opening 24 is surrounded by a screen 25 connected with the channel 26 of the nozzle orifice (see Fig. 7).

By making the connection between the extrusion channel 26 and the crosswise opening 24 such as shown, it enables the ice-cream substance to expand immediately before it reaches the discharge opening such as illustrated in Fig. 7. Due to the possibility of expansion, there will be room for a smaller accumulation of ice-cream when the knives 3,4 are arranged in their interacting position and block the nozzle orifice. The formed product 22 will still be provided with the same form even though the extruded substance performs an expansion until it meets the wall in the channel 26.

The remaining parts of the apparatus in Figs. 4-7 correspond to the apparatus parts already explained in Figs. 1-3.

The shape of the knives 3,4 appear more clearly in Fig. 3.

It is seen that the knife 3 is sharpened at one side by the side 27 facing away from the nozzle orifice 2. The knife 4 is provided with edge 12 sharpened at two sides. The edge 12 sharpened at two sides has been provided by modifying a knife 3. Thus, the knife 4 is created by the uttermost part of an edge of a knife 11 being sharpened away. In the shown embodiment, the angle 28 for the edge sharpened at one side is 30° in relation to the side face 7. The angle 29 on the knife 4's second sharpening is also 30° in relation to the side face 8 for abutment against the nozzle orifice. The uttermost end of the knife edge 11 may thus pass by the rearmost tip on the knife edge 12 without the risk of the tips colliding and being destroyed.

The distance between the two tips is quite small. Thus, it is preferred that the total thickness 30 of the knife edge is approximately 30 mm and that the height of the depression is approximately 1.2 mm. which largely corresponds to the distance which can also be found between the two tips of the knives.

In the shown embodiment, the knives are supplied with an undercutting 32 (see Fig. 3) immediately behind each of the two edges 11,12. In the shown embodiment, the undercuttings 32 are created at an inclined transfer face. Alternatively, convex or concave transfer faces may be provided as well as it may be possible to have a transfer face which is transversely of the knife edge.

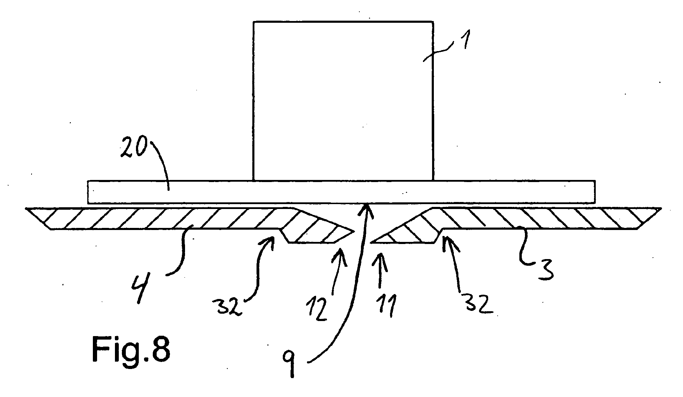

In Fig. 8, a modification of the knives 3,4 is shown in relation to the knives shown in Fig. 3. The modification must be seen in that both the edges 11,12 of the knives 3,4 are sharpened such that both the edge sharpened at one side and the edge sharpened at two sides are sharpened with an angle of approximately 30° at the side facing the extrusion nozzle 1 in relation to the side face facing away from the extrusion nozzle 1 and that an uttermost end part of the edge 12 sharpened at two sides is furthermore sharpened with a corresponding angle from the second side. With this orientation of the edges of the knives 11,12, the finished product will have a smaller ridge along the section line.

By using the two interacting knives, an advantage is especially achieved by a vertical extrusion as hereby throwing the product on the underlying transport face is avoided.

## Claims

1. Method for production of a confectionery product by extrusion through the nozzle, orifice of an extrusion nozzle where cutting off means are moved transversely of the direction of extrusion in order to separate the uttermost end part of the remaining part of the confectionery string and hereby form the confectionery product **characterized in that** the cutting off means in the form of two interacting knives are displaced through the confectionery string at great speed from a first position, where the edges of the knives are outside the confectionery string, to a second position within the confectionery string, where the edges of the knives overlap each other, and the nozzle orifice is thereby blocked and return to the first position, and that the side faces of the knives are kept in flexible abutment against the nozzle orifice during the displacement movement.

2. Method according to claim 1, **characterized in that** the displacement movement is a reciprocating movement and that the second position is arranged approximately at the middle of the nozzle orifice.

3. method according to claims 1 or 2, **characterized in that** the knives achieve accelerations up to 20g during their displacement movement and that a cyclus with a total travel of approximately 90 mm is run through in approximately 20 milliseconds.

4. Method according to any of the preceding claims, **characterized in that** the temperature of the knife is kept within an interval between 6 and 10°C, preferably by heating a block adjacent to the nozzle orifice and which the knives are held in contact with.

5. Apparatus for production of a confectionery product by extrusion which apparatus includes an extrusion nozzle with a nozzle orifice, cutting off means arranged to be moved transversely of the direction of extrusion in order to separate the unermost end part from the remaining part of the confectionery string, and hereby form the confectionery product, **characterized in that** the cutting off means include two interacting knives arranged to be displaced through the confectionery string at great speed from a first position, where the edges of the knives are outside the confectionery string, to a second position within the confectionery string, where the edges of the knives overlap each other and the nozzle orifice is thereby blocked, that the knives are connected with spring means, preferably a tension spring between each knife and the extrusion nozzle in order to keep the side faces in flexible abutment against the nozzle orifice, that the edge on the one knife is sharpened at one side and the edge on the second knife is sharpened at two sides.

6. Apparatus according to claim 5, **characterized in that** the knives are mounted in for reciprocating movements and that the second position is arranged approximately at the middle of the nozzle orifice.

7. Apparatus according to claims 5 or 6, **characterized in that** each knife has an undercutting at its side face facing away from the nozzle orifice which undercutting begins immediately behind the edge and has a substantial extension across the side face.

8. Apparatus according to any of the claims 5-7, **characterized in that** at the side facing away from the extrusion nozzle or the side facing the extrusion nozzle, the edge sharpened at one side as well as the edge sharpened at two sides are sharpened with an angle between 15 and 45°, preferably approximately 30° in relation to the opposite side face, and that an uttermost end part of the edge sharpened at two sides is furthermore sharpened with a corresponding angle from the second side.

9. Apparatus according to any of the claims 5-8, **characterized in that** around the extrusion nozzle a heated block is arranged abutting the nozzle orifice and which the knives are kept in abutment against.

10. Set of knives for use in an apparatus for production of a confectionery product by extrusion, and which comprises an extrusion nozzle with a nozzle orifice, which set of knives is arranged to be moved transversely of the direction of extrusion in order to separate the uttermost end part from the remaining part of the confectionery string and hereby form the confectionery product, **characterized in that** it comprises two interacting knives arranged in order for the knife edges to overlap each other as the edge on one knife is sharpened at one side and the edge on the second knife is sharpened at two sides.

## Patentansprüche

1. Verfahren zum Erzeugen eines Süßwarenprodukts durch Extrudieren durch die Düsenmündung einer Extrusionsdüse, wo Abschneidemittel quer zur Extrusionsrichtung bewegt werden, um den äußersten Endabschnitt von dem verbleibenden Teil des Süßwarenstrangs zu trennen und um **dadurch** das Süßwarenprodukt zu bilden, **dadurch gekennzeichnet, dass** die Abschneidemittel in Form von zwei miteinander in Wechselwirkung stehenden Messern durch den Süßwarenstrang mit großer Geschwindigkeit aus einer ersten Position, in der die Kanten der Messer sich außerhalb des Süßwarenstrangs befinden, in eine zweite Position innerhalb des Süßwarenstrangs, in der die Kanten der Messer miteinander überlappen und die Düsenmündung **dadurch** blockiert wird, verlagert werden und in die erste Position zurückkehren und dass die Seitenflächen der Messer während der Verlagerungsbewegung in einem flexiblen Anschlag an der Düsenmündung gehalten werden.

2. Verfahren nach Anspruch 1, **dadurch gekennzeichnet, dass** die Verlagerungsbewegung eine hin und her gehende Bewegung ist und dass die zweite Position ungefähr in der Mitte der Düsenmündung angeordnet ist.

3. Verfahren nach Anspruch 1 oder 2, **dadurch gekennzeichnet, dass** die Beschleunigungen der Messer während ihrer Verlagerungsbewegung bis zu 20 g erreichen und dass ein Zyklus mit einer Gesamtbewegung von etwa 90 mm während etwa 20 Millisekunden abläuft.

4. Verfahren nach einem der vorhergehenden Ansprüche, **dadurch gekennzeichnet, dass** die Temperatur des Messers in einem Intervall von 6 bis 10 °C gehalten wird, vorzugsweise durch Heizen eines Blocks in der Nähe der Düsenmündung, mit dem die Messer in Kontakt gehalten werden.

5. Vorrichtung zum Erzeugen eines Süßwarenprodukts durch Extrudieren, wobei die Vorrichtung eine Extrusionsdüse mit einer Düsenmündung und Abschneidemittel, die dazu ausgelegt sind, quer zu der Extrusionsrichtung bewegt zu werden, um den äußersten Endabschnitt von dem verbleibenden Teil des Süßwarenstrangs zu trennen und um **dadurch** das Süßwarenprodukt zu bilden, umfasst, **dadurch gekennzeichnet, dass** die Abschneidemittel zwei miteinander in Wechselwirkung stehende Messer umfasst, die dazu ausgelegt sind, durch den Süßwarenstrang mit großer Geschwindigkeit aus einer ersten Position, in der sich die Kanten der Messer außerhalb des Süßwarenstrangs befinden, in eine zweite Position innerhalb des Süßwarenstrangs, in der die Kanten der Messer miteinander überlappen und **dadurch** die Düsenmündung blockiert ist, verlagert zu werden, und dass die Messer durch Federmittel verbunden sind, vorzugsweise durch eine Zugfeder zwischen ihrem Messer und der Extrusionsdüse, um die Seitenflächen in einem flexiblen Anschlag an der Düsenmündung zu halten, und dass die Kante an dem einen Messer auf einer Seite geschärft ist und die Kante des zweiten Messers auf zwei Seiten geschärft ist.

6. Vorrichtung nach Anspruch 5, **dadurch gekennzeichnet, dass** die Messer für hin und her gehende Bewegungen angebracht sind und dass die zweite Position ungefähr in der Mitte der Düsenmündung angeordnet ist.

7. Vorrichtung nach den Ansprüchen 5 oder 6, **dadurch gekennzeichnet, dass** jedes Messer auf einer Seitenfläche, die von der Düsenmündung weggerichtet ist, einen Unterschnitt aufweist, wobei der Unterschnitt direkt hinter der Kante beginnt und eine wesentliche Erstreckung über die Seitenfläche besitzt.

8. Vorrichtung nach einem der Ansprüche 5-7, **dadurch gekennzeichnet, dass** auf der Seite, die von der Extrusionsdüse weggerichtet ist, oder auf der Seite, die der Extrusionsdüse zugewandt ist, die Kante, die auf einer Seite geschärft ist, sowie die Kante, die auf zwei Seiten geschärft ist, mit einem Winkel im Bereich von 15 bis 45 Grad, vorzugsweise etwa 30 Grad in Bezug auf die gegenüberliegende Seitenfläche geschärft sind und dass ein äußerster Endabschnitt der auf zwei Seiten geschärften Kante ferner mit einem entsprechenden Winkel zu der zweiten Seite geschärft ist.

9. Vorrichtung nach einem der Ansprüche 5-8, **dadurch gekennzeichnet, dass** um die Extrusionsdüse ein beheizter Block angeordnet ist, der an der Düsenmündung anliegt, wobei die Messer mit diesem Block in Anschlag gehalten werden.

10. Satz von Messern für die Verwendung in einer Vorrichtung für die Erzeugung eines Süßwarenprodukts durch Extrusion, die eine Extrusionsdüse mit einer Düsenmündung umfasst, wobei der Satz von Messern dazu ausgelegt ist, quer zur Extrusionsrichtung bewegt zu werden, um den äußersten Endabschnitt von dem verbleibenden Abschnitt des Süßwarenstrangs zu trennen und um **dadurch** das Süßwarenprodukt zu bilden, **dadurch gekennzeichnet, dass** er zwei miteinander in Wechselwirkung stehende Messer umfasst, die so angeordnet sind, dass die Messerkanten miteinander überlappen, wenn die Kante eines Messers auf einer Seite geschärft ist und die Kante des zweiten Messers auf zwei Seiten geschärft ist.

## Revendications

1. Procédé de production d'une friandise par extrusion à travers l'orifice de buse d'une buse d'extrusion où des moyens de découpe sont déplacés dans un sens transversal à la direction d'extrusion afin de séparer la partie la plus extrème de la partie restante du cordon de friandise et ainsi mouler la friandise, **caractérisé en ce que** les moyens de découpe en forme de deux couteaux coopérants sont déplacés à travers le cordon de friandise à grande vitesse à partir d'une première position où les tranchants des couteaux se trouvent en dehors du cordon de friandise jusqu'à une deuxième position dans le cordon de friandise, les tranchants de couteaux se recouvrent les uns les autres, et l'orifice de buse est ainsi bloqué et retourne à la première position, et que les côtés latéraux des couteaux sont mis en une butée flexible contre l'orifice de buse pendant le mouvement de déplacement.

2. Procédé selon la revendication 1, **caractérisé en ce que** le mouvement de déplacement constitue un mouvement réciproque et que la deuxième position est aménagée approximativement au milieu de l'orifice de buse.

3. Procédé selon les revendications 1 ou 2, **caractérisé en ce que** les couteaux obtiennent des accélérations jusqu'à 20 g pendant leur mouvement de déplacement et qu'un cycle ayant un trajet total d'approximativement 90 mm est traversé approximativement en 20 millisecondes.

4. Procédé selon l'une quelconque des revendications précédentes, **caractérisé en ce que** la température du couteau est maintenue dans un intervalle de 6 à 10°C, de préférence en chauffant un bloc adjacent l'orifice de buse et avec lequel les couteaux sont tenus en contact.

5. Appareil de production d'une friandise par extrusion, lequel appareil comprend une buse d'extrusion ayant un orifice de buse, des moyens de découpe aménagés pour être déplacés dans un sens transversal à la direction d'extrusion afin de séparer la partie la plus extrème de la partie restante du cordon de friandise et ainsi mouler la friandise, **caractérisé en ce que** les moyens de découpe comprennent deux couteaux coopérants aménagés pour être déplacés à travers le cordon de friandise à grande vitesse à partir d'une première position où les tranchants des couteaux se trouvent à l'extérieur du cordon de friandise jusqu'à une deuxième position à l'intérieur du cordon de friandise, les tranchants de couteaux se recouvrent les uns les autres et l'orifice de buse est ainsi bloqué, que les couteaux sont liés avec des moyens de ressort, de préférence un ressort de traction entre chaque couteau et la buse d'extrusion afin de maintenir les côtés latéraux en une butée flexible contre l'orifice de buse, que le côté sur l'un des couteaux est aiguisé sur un côté et le côté du deuxième couteau est aiguisé sur deux côtés.

6. Appareil selon la revendication 5, **caractérisé en ce que** les couteaux sont montés pour effectuer des mouvements réciproques et que la deuxième position est aménagée approximativement au milieu de l'orifice de buse.

7. Appareil selon les revendications 5 ou 6, **caractérisé en ce que** chaque couteau est doté d'une découpe en dessous sur son côté latéral tourné de l'orifice de buse laquelle découpe en dessous débute immédiatement derrière le tranchant et ayant une extension considérable à travers le côté latéral.

8. Appareil selon l'une quelconque des revendications 5-7, **caractérisé en ce que** sur le côté tourné de la buse d'extrusion ou le côté tourné vers la buse d'extrusion, le tranchant aiguisé sur un côté ainsi que le tranchant aiguisé sur deux côtés sont aiguisés avec un angle entre 15 et 45°, de préférence d'environ 30° par rapport au côté latéral opposé, et qu'une partie la plus extrême du tranchant aiguisé sur deux côtés est encore plus aiguisée avec un angle correspondant à partir du deuxième côté.

9. Appareil selon l'une quelconque des revendications 5-8, **caractérisé en ce qu'**un bloc chauffé est aménagé autour d'une buse d'extrusion aboutissant l'orifice de buse et contre lequel les couteaux sont mis en buté.

10. Jeu de couteaux pour utilisation dans un appareil d'une friandise par extrusion, lequel comprenant une buse d'extrusion ayant un orifice de buse, lequel jeu de couteaux est aménagé pour être déplacé dans un sens transversal à la direction d'extrusion afin de séparer la partie la plus extrème de la partie restante du cordon de friandise et ainsi mouler la friandise, **caractérisé en ce qu'**il comprend deux couteaux coopérants aménagés de façon que les tranchants de couteaux se recouvrent les uns les autres, vu que le tranchant sur l'un des couteaux est aiguisé sur un côté et que le tranchant sur le deuxième couteau est aiguisé sur deux côtés.
